# EUROPEAN PATENT SPECIFICATION

(11) **EP 4 222 929 B1**
(45) Date of publication and mention of the grant of the patent: **28.10.2026**
(21) Application number: 21806452.5
(22) Date of filing: 29.09.2021
(51) Int. Cl.: H04L 12/18

(54) **METHODS AND APPARATUS FOR SEAMLESS TRANSITION BETWEEN NETWORK CONFERENCES**
VERFAHREN UND VORRICHTUNG FÜR NAHTLOSEN ÜBERGANG ZWISCHEN NETZWERKKONFERENZEN
PROCÉDÉS ET APPAREIL DE TRANSITION SANS COUPURE ENTRE DES CONFÉRENCES PAR RÉSEAU

(30) Priority: 30.09.2020 US 202017039498; 30.09.2020 US 202017039682; 30.09.2020 US 202017039764
(43) Date of publication of application: 09.08.2023
(73) Proprietor: Zoom Communications, Inc., San Jose, CA 95113 (US)
(72) Inventor: JENSEN, Patrick, John, San Jose, California 95113 (US)
(74) Representative: Slingsby Partners LLP
(86) International application number: PCT/US2021/052547
(87) International publication number: WO 2022/072422

(56) References cited:
- EP-A1- 2 237 533
- US-A1- 2011 022 968
- US-A1- 2011 271 212
- US-A1- 2020 112 450

## Description

### CROSS REFERENCE TO RELATED APPLICATIONS

This application claims priority to U.S. Patent Application No. 17/039,498, filed September 30, 2020, titled "Methods and Apparatus for Displaying Up-Next Conference Status for Seamless Transition Between Network Conferences," and U.S. Patent Application No. 17/039,682, filed September 30, 2020, titled "Methods and Apparatus for Seamless Transition Between Network Conferences," and U.S. Patent Application No. 17/039,764, filed September 30, 2020, titled "Methods and Apparatus for Taking a Break After Seamless Transition Between Network Conferences".

### FIELD

The exemplary embodiments of the present invention relate to the field of network communication. More specifically, the exemplary embodiments of the present invention relate to methods and apparatus for seamless transition between network conferences.

### BACKGROUND

With the increasing popularity of digital electronics and network communications, networked conferences have become more popular. For example, distance learning, telehealth, tutoring, and/or training conferences are only few types of network conferences attended by users.

Typically, to attend conferences throughout the day, a user maintains a list or calendar of conference events to which the user plans to attend. Unfortunately, the user must constantly review the calendar, log in and out of conferences, and setup equipment, such as microphones and video equipment for each conference. Thus, it is very easy for users to spend a lot of time on setup and conference switching. Within this constant back and forth to join new conferences, the user also needs to have some time for breaks.

Therefore, it is desirable to have a mechanism that provides seamless and time-efficient transitions between network conferences.
US 2011/022968 A1 describes a method for transitioning an end user from a first meeting to a second meeting without requiring additional credential information to enable participation in the second meeting.
US 2020/112450 A1 describes a method for automatically joining a conference, in which a user is offered an option for enabling the automatic connection to the conference at multiple instances prior to the scheduled meeting.
US 2011/271212 A1 describes a method for managing multiple conferences via a conference user interface.

### SUMMARY

The invention describes a method for transitioning between network conferences according to independent claim 1 and corresponding apparatus and non-transitory computer readable medium according to claims 12 and 13, respectively. Additional aspects of the invention are defined in the dependent claims. In various embodiments, methods and apparatus are provided for seamless transition between network conferences. In an exemplary embodiment, a conference transition apparatus is provided that allows a user to participate in a current conference and to see Up-Next status information about an upcoming conference. In an embodiment, the Up-Next status information includes a start time of the upcoming conference and images of participants that have already joined the upcoming conference. The user can then transition to the next conference by selecting a join next conference selector. This selection will cause the user to leave the current conference and join the next conference using the same client application and conference state used in the previous conference, which greatly reduces the time to transition between conferences. The user can also transition to the next conference by selecting a break selector. This selection will cause the user to leave the current conference and join the next conference using the same client application and conference state as before. However, the user's live video stream will be replaced with a break icon and the user's microphone will be muted indicating that the user is on a break. After the break, the user can resume participation the newly joined conference.

In an embodiment, a method is provided for transitioning between network conferences. The method comprises attending a first network conference using a first conference state and conferencing application, and displaying, on a display screen, Up-Next conference status comprising a meeting time for a second network conference and images of attendees that have joined the second network conference. The method also comprises joining the second network conference using the first conference state and the conferencing application.

In an embodiment, apparatus is provided for transitioning between network conferences. The apparatus comprises a transceiver configured to communicate with a network server to attend a first network conference utilizing a first conference state and conferencing application, and a display screen that displays Up-Next conference status that comprises a meeting time for a second network conference and images of attendees that have joined the second network conference. The apparatus also comprises a processor that joins the second network conference utilizing the first conference state and the conferencing application.

In an embodiment, a non-transitory computer readable medium is provided on which are stored program instructions that, when executed by one or more processors, cause the one or more processors to transition between network conferences by performing operations of: attending a first network conference using a first conference state and a conferencing application; displaying Up-Next conference status comprises a meeting time and images of attendees that have joined a second network conference; and joining the second network conference using the first conference state and the conferencing application.

In an embodiment, a method is provided for displaying Up-Next conference status. The method comprises attending a first network conference, obtaining a meeting identifier and a meeting time for a second network conference, requesting conference status information for the second network conference based on the meeting identifier. The conference status information includes images of attendees that have joined the second network conference. The method also comprises receiving the conference status information, and displaying Up-Next conference status during the first network conference. The Up-Next conference status comprises the meeting time and the images of the attendees that have joined the second network conference.

In an embodiment, apparatus is provided for displaying Up-Next conference status. The apparatus comprises a transceiver configured to communicate with a network server to conduct a first network conference and a processor configured to obtain a meeting identifier and a meeting time for a second network conference, and request conference status information for the second network conference based on the meeting identifier. The conference status information includes images of attendees that have joined the second network conference. The apparatus also comprises a display screen configured to display Up-Next conference status during the first network conference. The Up-Next conference status comprises the meeting time and the images of the attendees that have joined the second network conference.

In an embodiment, a non-transitory computer readable medium is provided on which are stored program instructions that, when executed by one or more processors, cause the one or more processors to display Up-Next conference status by performing operations of: attending a first network conference; obtaining a meeting identifier and a meeting time for a second network conference; requesting conference status information for the second network conference based on the meeting identifier, where the conference status information includes images of attendees that have joined the second network conference; and displaying Up-Next conference status during the first network conference, where the Up-Next conference status comprises the meeting time and the images of the attendees that have joined the second network conference.

In an embodiment, a method is provided for taking a break after a transition between network conferences. The method includes operations of attending a first network conference using a first conference state and a conferencing application, and displaying Up-Next conference status about a second network conference. The method also includes operations of receiving a request to enter a break mode after joining the second network conference, joining the second network conference using the first conference state and the conferencing application, and transmitting a break mode icon to participants in the second network conference.

In an embodiment, an apparatus is provided for taking a break after a transition between network conferences. The apparatus comprises a transceiver configured to communicate with a network server to attend a first network conference utilizing a first conference state and a conferencing application, and a display screen that displays Up-Next conference status about a second network conference. The apparatus also comprises a processor that performs operations of: receiving a request to enter a break mode after joining the second network conference; joining the second network conference using the first conference state and the conferencing application; and transmitting a break mode icon to participants in the second network conference.

In an embodiment, a non-transitory computer readable medium is provided on which are stored program instructions that, when executed by one or more processors, cause the one or more processors to take a break after a transition between network conferences by performing operations of: attending a first network conference using a first conference state and a conferencing application; displaying Up-Next conference status about a second network conference; receiving a request to enter a break mode after joining the second network conference; joining the second network conference using the first conference state and the conferencing application; and transmitting a break mode icon to participants in the second network conference

Additional features and benefits of the exemplary embodiments of the present invention will become apparent from the detailed description, figures and claims set forth below.

### BRIEF DESCRIPTION OF THE DRAWINGS

The exemplary embodiments of the present invention will be understood more fully from the detailed description given below and from the accompanying drawings of various embodiments of the invention, which, however, should not be taken to limit the invention to the specific embodiments, but are for explanation and understanding only. This patent or application file contains at least one drawing executed in color. Copies of this patent or patent application publication with color drawing(s) will be provided by the Office upon request and payment of the necessary fee.
**FIG. 1** shows a diagram illustrating a communication network in which a conference transition apparatus is provided that allows an attendee to seamlessly transition between network conferences.
**FIG. 2** shows an exemplary detailed embodiment of a conference transition apparatus that allows an attendee to seamlessly transition between network conferences.
**FIG. 3** shows an exemplary detailed embodiment of a conference server for use with the conference transition apparatus shown in **FIG. 1****.**
**FIG. 4** shows an exemplary method for providing seamless conference transitions in accordance with various exemplary embodiments.
**FIG. 5** shows an exemplary detailed method for providing seamless conference transitions in accordance with various exemplary embodiments.
**FIGS. 6A-C** show exemplary screen shots illustrating operation of a conference transition apparatus to provide seamless conference transitions in accordance with various exemplary embodiments.
**FIG. 7** show exemplary screen shots illustrating operation of a conference transition apparatus to provide seamless conference transitions in accordance with various exemplary embodiments.
**FIG. 8** shows an exemplary detailed method for obtaining and displaying Up-Next conference status.
**FIG. 9** shows an exemplary detailed method for taking a break during a network conference.

### DETAILED DESCRIPTION

Embodiments of the present invention disclose systems, methods, and apparatus for providing seamless transitions between network conferences.

The purpose of the following detailed description is to provide an understanding of one or more embodiments of the present invention.

In the interest of clarity, not all of the routine features of the implementations described herein are shown and described. It will, of course, be understood that in the development of any such actual implementation, numerous implementation-specific decisions may be made in order to achieve the developer's specific goals, such as compliance with application and business related constraints, and that these specific goals will vary from one implementation to another and from one developer to another. Moreover, it will be understood that such a development effort might be complex and time-consuming but would nevertheless be a routine undertaking of engineering for those of ordinary skills in the art having the benefit of embodiments of this disclosure.

Various embodiments of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus (e.g., device) or method. The same reference indicators will be used throughout the drawings and the following detailed description to refer to the same or like parts.

In accordance with the embodiments of present invention, the components, process steps, and/or data structures described herein may be implemented using various types of operating systems, computing platforms, computer programs, and/or general-purpose machines. In addition, those of ordinary skills in the art will recognize that devices of a less general-purpose nature, such as hardware devices, field programmable gate arrays (FPGAs), application specific integrated circuits (ASICs), or the like, may also be used. Where a method comprising a series of process steps is implemented by a computer or a machine and those process steps can be stored as a series of instructions readable by the machine or computer for execution. The instructions may be stored on a tangible medium such as a computer memory device, such as, but not limited to, magnetoresistive random access memory ("MRAM"), phase-change memory, or ferroelectric RAM ("FeRAM"), flash memory, ROM (Read Only Memory), PROM (Programmable Read Only Memory), EEPROM (Electrically Erasable Programmable Read Only Memory), Jump Drive, magnetic storage medium (e.g., tape, magnetic disk drive, and the like), optical storage medium (e.g., CD-ROM, DVD-ROM, paper card and paper tape, and the like) and other known types of program memory.

The term "system" or "device" is used generically herein to describe any number of components, elements, sub-systems, devices, packet switch elements, packet switches, access switches, routers, networks, computer and/or communication devices or mechanisms, or combinations of components thereof. The term "computer" includes a processor, memory, and buses capable of executing instruction wherein the computer refers to one or a cluster of computers, personal computers, workstations, mainframes, or combinations of computers thereof.

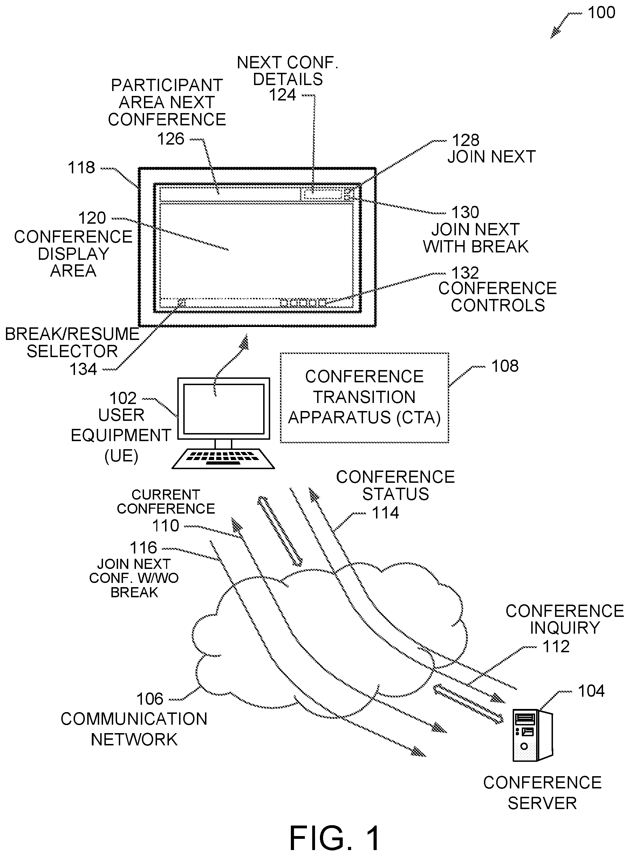

**FIG. 1** shows a diagram illustrating a communication network **100** in which a conference transition apparatus (CTA) **108** is provided that allows a user to seamlessly transition between network conferences.

The communication network **100** comprises user equipment (UE) **102** and conference server **104** that are configured to communicate utilizing a communication network **106.** In an embodiment, the communication network **106** comprises a wired communication network, a wireless communication network, or a combination of wired and wireless communication networks. The conference server **104** is configured to communicate over the network **106** to facilitate network conferences between multiple user devices of various types (e.g., desk-top computers. lap-top computers, tablets, smart phones, etc.) using any type of network protocol to provide secure network conferences in accordance with various exemplary embodiments.

In an embodiment, the user equipment **102** comprises the conference transition apparatus **108.** The CTA **108** operates to provide seamless transition between network conferences. During operation, the user of user equipment **102** participates in a current network conference **110** that is facilitated by the server **104.** For example, the user equipment **102** utilizes a client application to participate in the current conference. During this conference, the CTA **108** accesses a calendar of the user to determine a conference identifier of the next conference the user is scheduled to attend. The CTA **108** transmits a conference inquiry **112** to the conference server **104.** The conference inquiry requests information about the upcoming conference identified by the conference identifier. The conference server **104** responds to the conference inquiry by transmitting conference status **114.** The conference status **114** identifies the status of the upcoming conference and provides images of conference attendees that have already joined the upcoming conference.

The CTA **108** receives the conference status **114** and displays this information to the user. In an embodiment, the status information is displayed a short time before the start time of the upcoming conference. For example, a display **118** of the UE **102** illustrates how the status information is displayed to the user. The display **118** includes a conference display area **120** that displays information about the current conference **110.** The display **118** also includes an Up-Next status area **124** that displays details of the next conference. These details include, but are not limited to, the conference host, conference topic, start time, and any other suitable details. The display **118** also includes a next conference participant area **126** that displays images of participants that have already joined the next conference. The display **118** also includes a join next conference selector **128** and a join with break selector **130.** These selectors allow the user to seamlessly join the next conference with or without a break. The display **118** also includes conference controls **132** and a break/resume selector **134.** The conference controls **132** provide a variety of controls that can be used adjust conference settings while participating in a conference. The break/resume selector **134** allows a user to take a break during a current conference and to resume participation in that conference when the break is over.

After displaying information about the next conference to the user, the CTA **108** receives user input that indicates the action to be taken. For example, the user enters user input using a mouse or keyboard. In an embodiment, the user input activates either the join next conference selector **128** or the join with break selector **130.** If the user activates the join next conference selector **128,** the CTA **108** transmits a join request **116** to the server **104** to join the next conference using the same conference state and current client application. In an embodiment, the conference state comprises settings for the microphone and camera that were used for the previous conference. These settings are stored as the conference state and used for the next conference to provide a seamless transition to the next conference from the previous conference. After joining the next conference, the user's microphone is muted. By using the same client application to join the next conference, the transition becomes seamless since it is not necessary to remove and reload the client application to join the next conference.

In another embodiment, the user can transition to the next conference by selecting the join with break selector **130.** In this mode, the user joins the upcoming conference with the same state and same client application used in the previous conference and with the microphone placed in the mute mode. However, in break mode, the live video stream of the user is replaced with a break icon informing the conference participants of the next conference that the user is currently on break. This allows the attendees of the upcoming conference to know that the user will be participating shortly but is taking a break. When the user returns from the break, the user can simply select the break/resume selector **134,** which allows the user to resume participating in the next conference by replacing the break icon with the live video stream of the user. The break/resume selector **134** can also be used to allow the user to take a break during a current conference. In this case, when selecting the break/resume selector **134** the user's live video stream is replaced with the break icon and the microphone is muted. When the user returns from the break, the user again selects the break/resume selector **134** to resume participation in the current conference.

Therefore, in various an exemplary embodiments, the conference transition apparatus **108** allows a user to participate in a current conference and see status information about an upcoming conference. The status information includes a start time of the upcoming conference and images of participants that have already joined the upcoming conference. The user can then seamlessly transition to the next conference by selecting the join next conference selector **128,** as illustrated in the display **118.** This selection will cause the user to leave the current conference and join the next conference using the same conference state and same client application. The user can also transition to the next conference by selecting the join with break selector **130,** as illustrated in the display **118.** This selection will cause the user to leave the current conference and join the next conference using the same conference state and same client application. However, the user's live video stream will be replaced with a break icon and the user's microphone will be muted. After the break, the user can resume participation in the new conference by selecting the break/resume selector **134.**

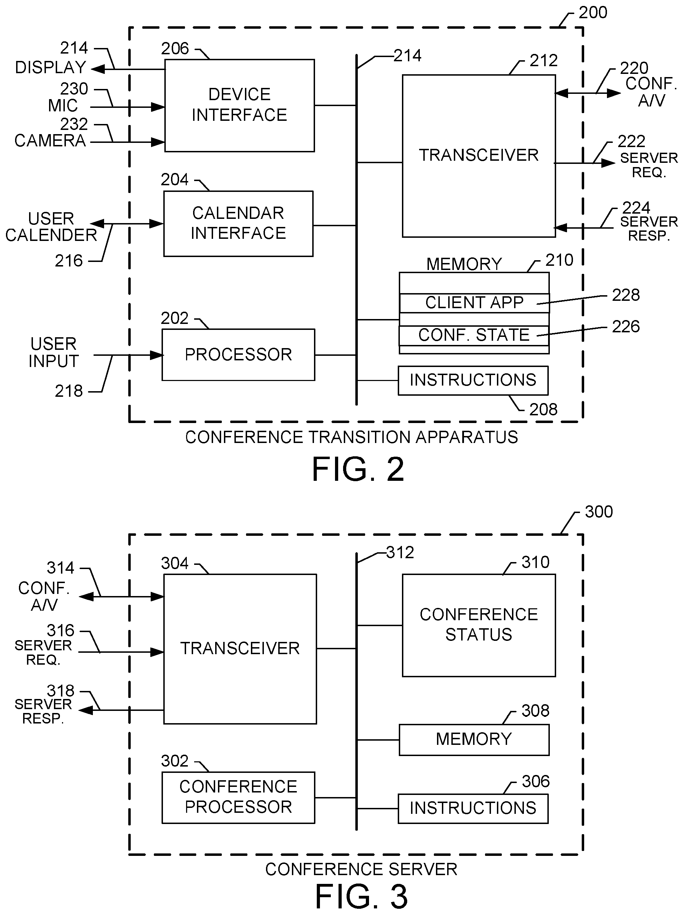

**FIG. 2** shows an exemplary detailed embodiment of a conference transition apparatus (CTA) **200** that allows an attendee to seamlessly transition between network conferences. For example, the CTA **200** is suitable for use as the conference transition apparatus **108** shown in **FIG 1****.** The CTA **200** comprises processor **202,** calendar interface **204,** device interface **206,** instructions **208,** memory **210,** and transceiver **212** all connected to communicate over bus **214.** The processor **202** executes the instructions **208** and utilizes the memory **210** and other functional blocks of the CTA **200** to perform the operations described herein.

During operation, the processor **202** receives user input **218** (e.g., mouse or keyboard inputs), and based on the user input, controls the transceiver **212** to join a current conference during which conference audio and video signals **220** are exchanged with other conference participants. For example, a client application **228** is downloaded and used to conduct the current conference. During the current conference, the processor **202** controls the device interface **206** to communicate with a display screen, microphone, and camera. For example, the device interface **206** outputs a display signal **214** that is displayed on the display screen. The device interface **206** also receives an audio signal **230** from a microphone and a video signal **232** from a camera.

In an embodiment, the processor **202** communicates with the calendar interface **204** to access a user calendar to obtain information about conferences the user is scheduled to attend. The conference information includes conference identifiers that identify each upcoming conference. For example, the calendar interface **204** communicates with the user's calendar application (e.g., Google, Yahoo, Outlook, or others) over signal path **216** to obtain a conference identifier and start time for the next scheduled conference. From the calendar information, the processor **202** generates a server request **222** that includes the conference identifier. The request **222** is transmitted to a conference server to obtain information about the upcoming conference. The conference server responds with a server response **224** that includes information about the upcoming conference. For example, the information includes the name/image of the conference host and images of conference participants that have already joined the upcoming conference.

In an embodiment, the processor **202** is aware of the start time of the upcoming conference. When there is less than five minutes until the start time of the upcoming conference, the processor **202** controls the device interface **206** to output a display signal **214** to display information about the upcoming conference on a user display screen. For example, the device interface **206** displays information about the current conference on the display screen **118** using display signal **214.** The information about the current conference includes images **122** of the current participants. The processor **202** controls the device interface **206** to display images of participants **126** that have already joined the upcoming conference and the status **124** of the upcoming conference at a top portion of the display screen **118.** It should be noted that the processor **202** can display the status information of the upcoming conference at any time and that the user can change the time when the status of the upcoming conference is displayed. Furthermore, the information can be presented on the user's display screen using any display technique, such as scrolling, wiping, fading in/out, or any other display technique.

The user has the option to seamlessly transition to the next conference by providing user input, for instance, by selecting the join NEXT selector **128** on the display. The user may also take a break by selecting the join with break selector **130** on the display. When selecting the join NEXT selector **128,** the processor **202** receives this user input and generates a join request (e.g., server request **222)** that is transmitted to the conference server to allow the user to join the upcoming conference. When joining the upcoming conference, the user joins the conference using the same client application **228** and current conference state **226,** which includes the settings for the audio and video equipment of the user's equipment. The processor **202** maintains the state **226** and the client application **228** in the memory **210** so that these settings/application do not have to be reset or reloaded when joining the new conference. In addition, once the new conference is joined the microphone is placed in a mute mode so that the audio signal **230** is muted.

In another embodiment the user can join the upcoming conference but take a break by selecting the join with break selector **130.** When the processor receives this user input, the processor generates the join request as before using the same client application **228** and conference state **226.** The processor **202** controls the conference microphone to place it in a mute mode. The processor **202** replaces the live video stream 232 from the camera of the user equipment with a break icon (or other image) that is transmitted to other participants indicating that the user is on a break. When the user finishes the break, the user provides input to the processor **202,** by selecting the break/resume selector **134,** which re-enables the user's live video stream 232 to be transmitted so that the user can participate in the newly joined conference.

In various exemplary embodiments, the CTA **200** performs at least the following operations to provide seamless transition between network conferences.
1. Join a first conference using a client application and conference state that are saved in a memory of the user device.
2. Obtain calendar information that identifies an upcoming second conference.
3. Wait until a selected time interval before the start of the upcoming second conference. For example, wait until five minutes before the start of the upcoming conference.
4. Transmit a status request to a conference server that requests information about the upcoming second conference. The status request requests information, such as the name of the host and images of participants that have already joined the upcoming conference.
5. Display the information about the upcoming conference to the user during the current conference.
6. Receive a "join NEXT" input from the user that indicates that the user wants to join the upcoming conference. The current client application and conference state are maintained when joining the upcoming conference to provide a seamless transition and the microphone is muted.
7. Receive a "join with break" input from the user that indicates that the user wants to join the upcoming conference but wants to take a break. The current client application and conference state are maintained when joining the upcoming conference to provide a seamless transition and the microphone is muted. The user's live video stream is replaced with a break icon that is transmitted to the attendees of the upcoming conference.
8. After returning from the break, the user provides user input (e.g., selects the break/resume selector **134)** to resume participation in the newly joined conference. The transmitted break icon is replaced with the user's live video stream.

**FIG. 3** shows an exemplary detailed embodiment of a conference server **300.** For example the conference server **300** is suitable for use as the conference server **104** shown in **FIG. 1****.** The conference server comprises a conference processor **302,** transceiver **304,** instructions **306,** memory **308,** and a conference status memory **310,** all connected to communicate over bus **312.**

During operation, the conference processor **302** executes instructions **306** and utilizes the memory **308** to perform the operations of the conference server described herein. The transceiver **304** communicates with network participants using a network, such as the network **106** shown in **FIG. 1****.** The transceiver **304** receives server requests **316** from network participants and processes these requests to enable network conferences between the network participants. For example, during a network conference, audio and video signals **314** are exchanged between the conference participants.

During operation, the conference server **300** facilitates a network conference between multiple participants. The conference server **300** also maintains conference status **310,** which describes current and upcoming network conferences. For example the conference status **310** describes information about an upcoming conference, such as a conference identifier, the name/image of the conference host, the topic of the conference, the invited participants to the conference, and the participants that have already joined the conference.

In an embodiment, user equipment, such as user equipment **102** shown in **FIG. 1****,** participates in a current network conference. The user equipment comprises the CTA **200** that sends a request **316** to the conference server requesting status of an upcoming conference. The request includes a conference identifier and is received by the transceiver **304** and passed to the conference processor **302.** The conference processor **302** uses the identifier to access the conference status **310** to retrieve the requested information. The conference processor **302** transmits the requested information using the transceiver **304** by generating a server response **318** that is sent to the requesting user equipment. In an embodiment, the status information includes the name, start time, host name/image, participant names/images, and names/images of participants that have already joined the upcoming conference. Therefore, in accordance with the various embodiments of the invention, it is possible for an attendee of a current conference to request status information concerning an upcoming conference. The status information is used to allow the requesting attendee to seamlessly transition from the current conference to the upcoming conference.

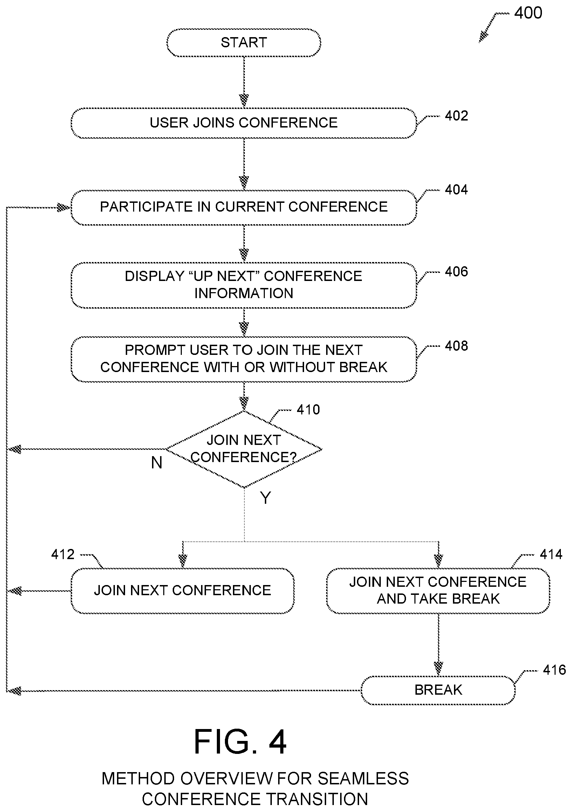

**FIG. 4** shows an exemplary method **400** for providing seamless conference transitions in accordance with various exemplary embodiments. For example, in an embodiment, the method **400** is performed by the conference transition apparatus **108** shown in **FIG. 1** or the CTA **200** shown in **FIG. 2**

At block **402,** a user joins a conference. For example, the user controls the user equipment **102** to communicate with the server **104** to join a network conference. In an embodiment, a conference client application is downloaded and used to allow the user to participate in the current conference.

At block **404,** the user participants in the current conference. For example, the user of UE **102** participates in a current conference using the conference client application as indicated at **110.**

At block **406,** during the current conference, status information regarding an upcoming conference is displayed to the user. The status information includes the time of the conference, the name of the conference host, and images of conference attendees that have already joined the upcoming conference. For example, the CTA **108** obtains information about the upcoming conference and displays the next conference details **124** and next conference participants **126** on the display screen **118.**

At block **408,** the user is prompted to choose whether to join the next conference with or without a break. For example, the join NEXT selector **128** and the join with break selector **130** are displayed to the user, as shown in the display screen **118.**

At block **410,** a determination is made as to whether the user will seamlessly join the upcoming conference. For example, the user views a display of upcoming conference status information during the pending conference. The user can select to join the upcoming conference in a seamless fashion where the client application and state of the current conference is maintained when the user joins the upcoming conference. The user can also join the upcoming conference and then take a break. If the user decides not to join the upcoming conference, the method continues back to block **404** where the user continues to participate in the current conference. If the user decides to join the upcoming conference, the method continues to block **412.** If the user wishes to join the upcoming conference and take a break, the method proceeds to block **414.**

At block **412,** the user seamlessly joins the upcoming conference. For example, the user selects the next conference selector **128** to seamlessly join the upcoming conference. The microphone and video settings of the user's equipment are maintained and the same client application is used when joining the upcoming conference. After joining the conference, the user's microphone is placed in the mute state. The method then proceeds to block **404** where the user participates in the newly joined conference.

At block **414,** the user seamlessly joins the upcoming conference and then takes a break. For example, the user selects the join with break selector **130** to seamlessly join the upcoming conference and then take a break. The microphone and video settings of the user's equipment are maintained and the same client application is used when joining the upcoming conference. After joining the conference, the microphone is placed in the mute state and a break icon is transmitted in place of the user's live video stream.

At block **416,** the user takes a break and when returning provides user input that indicates that the break is over. The user's live video stream is transmitted allowing the participants of the upcoming conference to see the user. The user's microphone is also unmuted. The method then proceeds to block **404** where the user participants in the newly joined conference.

Thus, the method **400** describes operations for seamless conference transitions in accordance with various exemplary embodiments. It should be noted that the operations of the method **400** are exemplary and not limiting of the scope of the embodiments. Furthermore the operations of the method **400** can be changed, deleted, rearranged, added to, or otherwise modified within the scope of the embodiments.

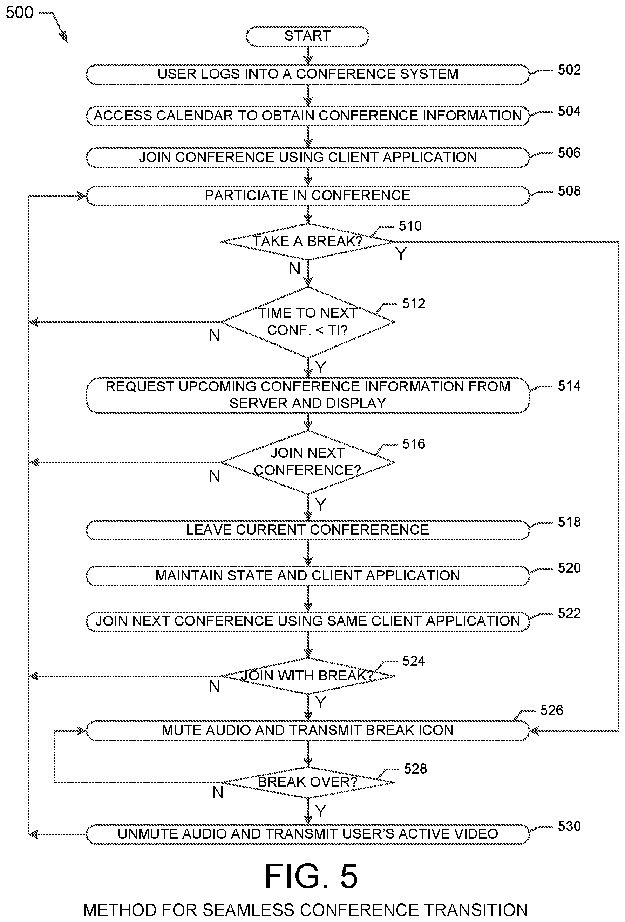

**FIG. 5** shows an exemplary detailed method **500** for providing seamless conference transitions in accordance with various exemplary embodiments. For example, in an embodiment, the method **500** is performed by the CTA **108** shown in **FIG. 1** **or** the conference transition apparatus **200** shown in **FIG. 2****.**

At block **502,** a user logs into a conference system. For example, the user of the UE **102** logs into the conference server **104.**

At block **504,** conference information is obtained from a user's calendar. For example, if the user maintains a calendar, such as an Outlook or Google calendar, information about upcoming conferences is obtained from the calendar. For example, the processor **202** controls the calendar interface **204** to access a calendar maintained by the user. The calendar includes conference identifiers for upcoming conferences that the user is scheduled to join.

At block **506,** the user joins a network conference. For example, the UE **102** communicates with the network server **104** to join a network conference. For example, a client application **228** is downloaded to the user equipment **102** and used to allow the user to join the network conference.

At block **508,** the user participates in the conference. For example, the user participates in the current conference, as indicated at **110.**

At block **510,** a decision is made by the user whether or not to take a break. For example, the user can select a break/resume selector **134** as user input to the UE **102.** If the user decides to take a break and selects the selector **134,** the method proceeds to block **526.** If the user does not want a break the method proceeds to block **512.**

At block **512,** a determination is made as to whether the time remaining before the next scheduled conference (e.g., Up-Next) is less than a selected time interval (TI). For example, the time interval can be five minutes or any other desired time interval. In an embodiment, the processor **202** is aware of the user's conference schedule obtained from the user's calendar and determines if the time to the next scheduled conference is less than the selected TI. For example, if the TI is five minutes and there is less than five minutes to the next conference, the method proceeds to block by **514.** If the time until the next conference is greater than the selected TI, the method proceeds back to block **508.**

At block **514,** a request for upcoming conference information is made to the conference server. The request includes a request for the name of the host and video images of the conference participants that have already joined the upcoming conference. For example, the processor **202** generates the request to include the conference identifier and controls the transceiver **212** to transmit the request **222** to the network server. The server transmits a server response **224** that includes the requested information. This information is then displayed to the user, for example, as part of the next conference details **124** and the next conference participant images **126.**

At block **516,** a decision is made as to whether or not to join the next conference. If the user decides not to join the next conference, the method proceeds to block **508** where the user participates in the current conference. If the user decides to join the next conference, the method proceeds to block **518.**

At block **518,** the user exits from the current conference. For example, if the user is a participant of the current conference, the user simply leaves the current conference. If the user is a host of the current conference, the user performs any necessary operations to end the current conference.

At block **520,** the conference state and client application are maintained when the user leaves or ends the current conference. For example, the conference state includes the microphone settings and the camera settings utilized by the user in the previous conference. The processor **202** stores this state **226** information in the memory **210.** The client application **228** used for the previous conference is also maintained in the memory **210.**

At block **522,** the user joins the next conference using the same client application **228** and with the conference state **226** that was stored from the previous conference. The user's microphone is muted after joining the next conference. For example, the processor **202** executes the client application **228** to communicate with the network server **104** to join or host the next conference. Since the same conference state **226** and client application **228** are utilized, the transition to the next conference is seamless, which is efficient and reduces transition time.

At block **524,** a determination is made as to whether the user wants to take a break before joining the next conference. For example, the user may have selected the join with break selector **130** when joining the next conference. If the user did not select the join with break selector **130,** the method proceeds to block **508** where the user participates in the newly joined conference. If the user did select the join with break selector **130,** the method proceeds to block **526.**

At block **526,** the user's audio signal **230** is muted in the user's live video stream **232** is replaced with a break icon that is transmitted to participants of the next conference. For example, the break icon could be a coffee cup or other icon that indicates that the user is taking a break.

At block **528,** a determination is made as to whether or not the break is over. If the break is not over, the method proceeds back to block **526.** If the user provides input to indicate that the break is over, such as selecting the break/resume selector **134,** the method proceeds to block **530.**

At block **530,** the user's microphone audio signal **230** is unmuted and the break icon is changed to transmit the user's live video stream **232** to allow the user to participate in the newly joined conference. The method then proceeds to block **508.**

Thus, the method **500** describes operations for providing seamless conference transitions. For example, in an embodiment, the method performs operations for transitioning between network conferences. The method comprises attending a first network conference using a first conference state and a conferencing application, and displaying, on a display screen, Up-Next conference status comprising a meeting time for a second network conference and images of attendees that have joined the second network conference. The method also comprises joining the second network conference using the first conference state and the conferencing application. It should be noted that the operations of the method **500** are exemplary and not limiting of the scope of the embodiments. Furthermore the operations of the method **500** can be changed, deleted, rearranged, added to, or otherwise modified within the scope of the embodiments.

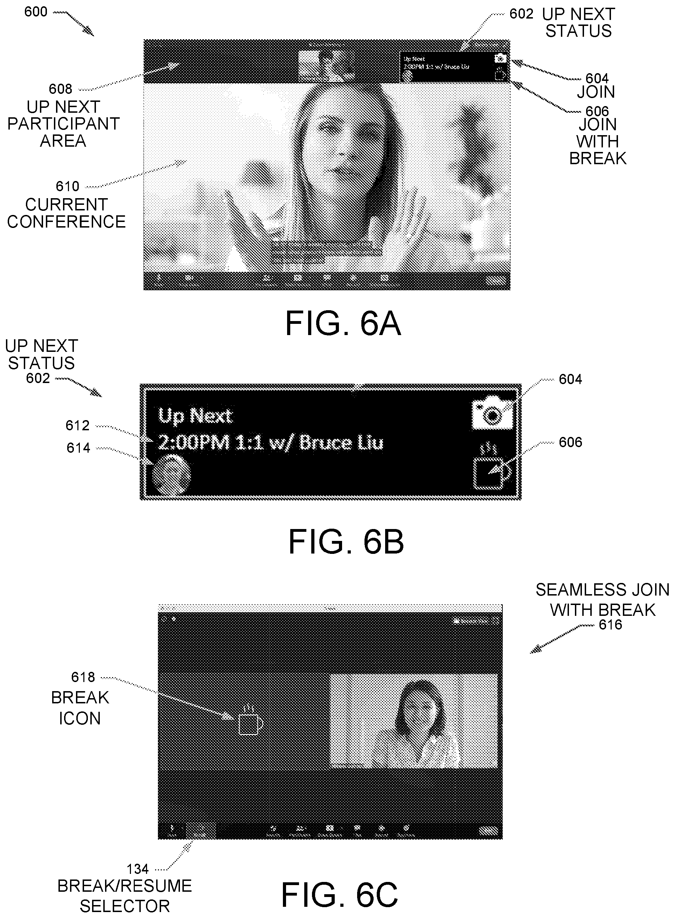

**FIGS. 6A-C** show exemplary screen shots illustrating operation of a conference transition apparatus to provide seamless conference transitions in accordance with various exemplary embodiments.

**FIG. 6A** shows a screen shot **600** illustrates a current conference **610** in which Up-Next status **602** is displayed when the time for the next scheduled conference is less than a selected time interval from the current time. The Up-Next status **602** includes a join selector **604** and a join with break selector **606.** The screen shot **600** also illustrates an Up-Next participant area **608** that displays user images of participants that have already joined the next conference.

**FIG. 6B** shows the Up-Next status **602** display. In an embodiment, the Up-Next status **602** comprises conference details **612,** such as conference time and host name. The Up-Next status **602** also comprises a host image **614** and the join **604** and join with break **606** selectors.

**FIG. 6C** shows a screen shot **616** that is presented when the join with break selector **606** is selected. In this case, the user seamlessly joins the next conference but the user's transmitted live video stream is replaced with the break icon **618.** After completing the break, the user can select the break/resume selector **134** to return to the newly joined conference. In this case, the transmitted break icon **618** is replaced with the user's live video stream.

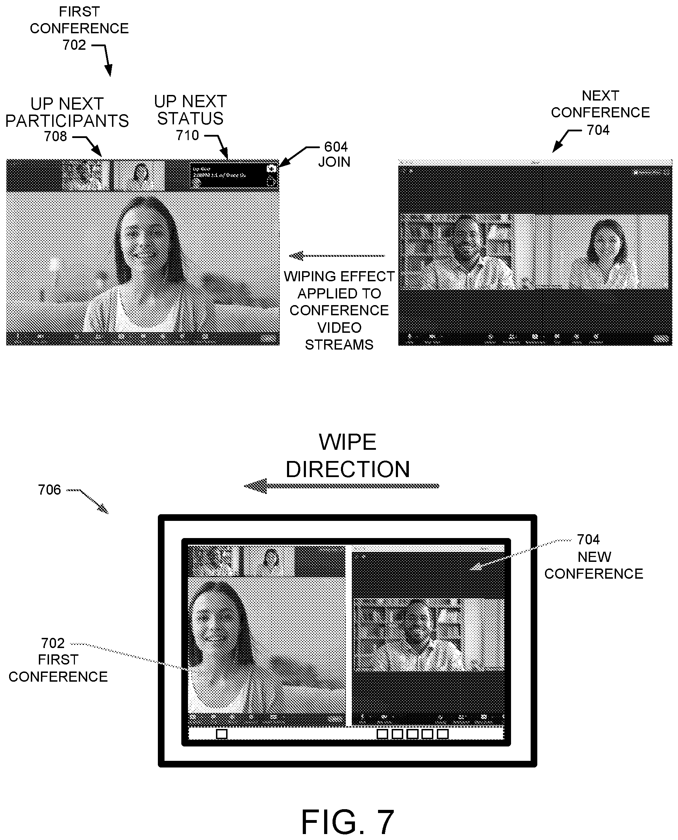

**FIG. 7** show exemplary screen shots illustrating operation of a conference transition apparatus to provide seamless conference transitions in accordance with various exemplary embodiments. For example, the screen shots illustrated in **FIG. 7****,** demonstrate the operation of a user transitioning to a new conference after selecting the join selector **604** shown in **FIG. 6A****.**

The screen shot **702** illustrates a first conference in which the user participates. The display of the first conference **702** includes a display of up-NEXT status **710** that provides status details of a next conference **704.** The display of the first conference **702** also includes images **708** of participants that have already joined the next conference **704.** After selecting the join selector **604,** the user seamlessly joins the next conference **704.** For example, the seamless transition occurs because the next conference **704** is joined using the same conference state and client application that were saved from the first conference **702.** When seamlessly joining the next conference **704,** a "wiping" display effect is utilized to wipe the first conference **702** off the display and simultaneously wipe the next conference **704** onto the display.

In an embodiment, the user's display is updated to show the transition from the first conference **702** to the next conference **704** using a wiping effect. For example, as illustrated in the screen shot **706,** the first conference **702** is wiped away in the wipe direction (e.g., right to left) and the next conference **704** is wiped onto the screen. It should be noted that the wiping display effect is exemplary and that any other display effect or technique can be utilized to display the seamless transition from the first conference **702** to the next conference **704.**

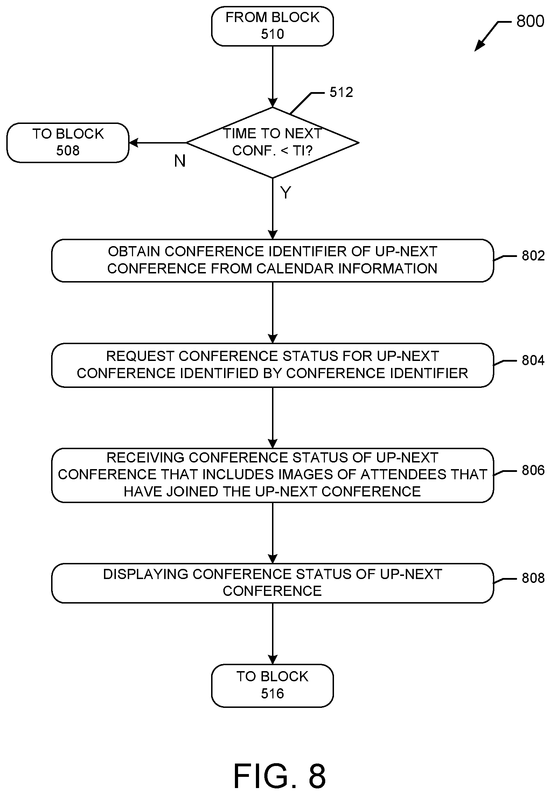

**FIG. 8** shows an exemplary detailed method **800** for obtaining and displaying Up-Next conference status. For example, in an embodiment, the method **800** describes operations at blocks **802-808** that are performed within the block **514** shown in **FIG. 5****.**

At block **512,** a determination is made as to whether the time remaining before the next scheduled conference is less than a selected time interval (TI). For example, the time interval can be five minutes or any other desired time interval. In an embodiment, the processor **202** is aware of the user's conference schedule obtained from the user's calendar and determines if the time to the next scheduled conference is less than the selected TI. If the time to the next conference is less than the selected TI, the method proceeds to block by **802.** If the time until the next conference is greater than the selected TI, the method proceeds back to block **508.**

At block **802,** the conference identifier is obtained from the Up-Next conference information that is retrieved at block **504.** For example, the processor **202** retrieves Up-Next conference information from a user's calendar or other database that includes information and times for conferences that the user desires to attend. For example, the processor **202** controls the calendar interface **204** to obtain the user's Up-Next conference information from the user's calendar. For example, the calendar information may describe a first conference scheduled for 1pm and a second conference scheduled for 2pm. Each conference has an associated start time and identifier. When the user is participating in the first conference, the Up-Next conference is the second conference scheduled for 2pm.

At block **804,** a request for status information for the Up-Next conference is made to a conference server or other entity with knowledge of the Up-Next conference. The request includes the conference identifier associated with the Up-Next conference. For example, the processor **202** generates the request to include the Up-Next conference identifier and controls the transceiver **212** to transmit the request to a conference server as part of a server request **222.**

At block **806,** the conference status information of the Up-Next conference is received. In an embodiment, the conference server transmits the Up-Next conference status information to the user's device. For example, the transceiver **212** receives the Up-Next conference status in a server response **224** and passes this information to the processor **202.** In an embodiment, the Up-Next conference status includes the name/image of the conference host, topic of the conference, list of invited attendees, and name/image of attendees that have already joined the Up-Next conference.

At block **808,** the status of the Up-Next conferences is displayed to the user. For example, the processor **202** controls the device interface **206** to display the Up-Next conference status on a display of the user's equipment. In an embodiment, the Up-Next conference status that is displayed includes the Up-Next status (e.g., Up-Next status **710)** and the Up-Next participants **708** that have already joined the Up-Next conference. The method then proceeds to block **516.**

Thus, the method **800** describes operations for retrieving and displaying Up-Next conference status. In an embodiment, the method **800** performs operations for displaying Up-Next conference status. The operations comprise attending a first network conference, obtaining a meeting identifier and a meeting time for a second network conference, requesting conference status information for the second network conference based on the meeting identifier, wherein the conference status information includes images of attendees that have joined the second network conference, receiving the conference status information, and displaying Up-Next conference status during the first network conference, wherein the Up-Next conference status comprises the meeting time and the images of the attendees that have joined the second network conference.

It should be noted that the operations of the method **800** are exemplary and not limiting of the scope of the embodiments. Furthermore the operations of the method **800** can be changed, deleted, rearranged, added to, or otherwise modified within the scope of the embodiments.

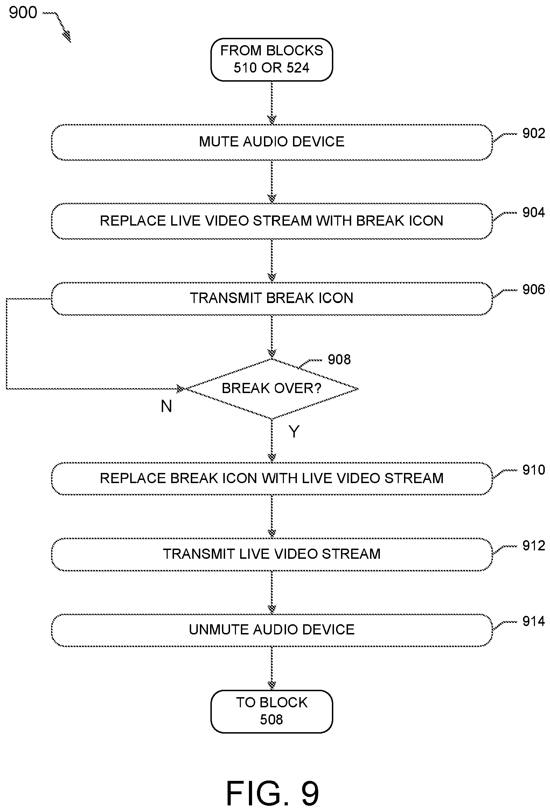

**FIG. 9** shows an exemplary detailed method **900** for taking a break during a network conference. For example, in an embodiment, the method **900** describes operations at blocks **902-909** that are performed within the blocks **526, 528,** and **530** shown in **FIG. 5****.**

At block **902,** a decision to take a break during a current conference or when joining an Up-Next conference has been made. For example, block **902** is entered from block **510** when a decision is made to take a break during a current conference. Block **902** also is entered when a decision to take a break is made when joining an Up-Next conference at block **524.** The decision to take a break is determined from user input, such as when the user selects the join with break selector **606.** When the user input to take a break is received, the audio signal **230** from the audio device (microphone) is muted. In an embodiment, the device interface **206** blocks the audio signal **230** when the microphone is muted.

At block **904,** the live video stream transmitted from the user's equipment is replaced with a break icon. For example, as illustrated in **FIG. 6C****,** the break icon **618** replaces the user's live video stream. In an embodiment, the processor **202** obtains the break icon image from the memory **210** and replaces the live video stream **232** from the camera with this icon image.

At block **906,** the break icon is transmitted in place of the user's live video stream. For example, the processor **202** controls the transceiver **212** to transmit the break icon during the current conference or the newly joined conference instead of the user's live video stream.

At block **908,** a determination is made as to whether the break is over. For example, the user provides user input to indicate that the break is over. In an embodiment, the user selects the break/resume selector **134** to indicate that the break is over. If the user indicates that the break is not over, the method proceeds to block **906.** If the user indicates that the break is over, the method proceeds to block **910.**

At block **910,** the break icon is replaced with the user's live video stream. In an embodiment, the processor **202** replaces the break icon with the user's live video stream **232** from the camera.

At block **912,** the user's live video stream is transmitted in place of the break icon. For example, the processor **202** controls the transceiver **212** to transmit the user's live video stream during the current conference or the newly joined conference instead of the break icon.

At block **914,** the audio signal **230** from the audio device (microphone) is unmuted. In an embodiment, the processor **202** controls the device interface **206** to allow the audio signal **230** to be transmitted during the conference. The method then proceeds to block **508** shown in **FIG. 5****.**

Thus, the method **900** describes operations for taking a break after a seamless transition between network conferences. In an embodiment, a method is provided for taking a break after a transition between network conferences. The method includes operations of attending a first network conference using a first conference state and a conferencing application, and displaying Up-Next conference status about a second network conference. The method also includes operations of receiving a request to enter a break mode after joining the second network conference, joining the second network conference using the first conference state and the conferencing application, and transmitting a break mode icon to participants in the second network conference. It should be noted that the operations of the method **900** are exemplary and not limiting of the scope of the embodiments. Furthermore the operations of the method **900** can be changed, deleted, rearranged, added to, or otherwise modified within the scope of the embodiments.

The exemplary embodiments described herein are implemented using customized hard-wired logic, one or more ASICs or FPGAs, firmware and/or program logic which in combination with a computer system causes or programs the disclosed apparatus to be a special-purpose machine. According to one embodiment, the operations described herein are performed by a processor or computer executing one or more sequences of one or more instructions contained in memory. Such instructions may be read into memory from another storage medium. Execution of the sequences of instructions contained in memory causes a processor to perform the process steps described herein. In alternative embodiments, hard-wired circuitry may be used in place of or in combination with software instructions.

The term "storage media" as used herein refers to any non-transitory medium that stores data and/or instructions that cause a machine to operate in a specific fashion. Such storage media may comprise non-volatile media and/or volatile media. Non-volatile media includes, for example, optical or magnetic disks, such as memory 404 or instructions memory 412. Volatile media includes dynamic memory. Common forms of storage media include, for example, a floppy disk, a flexible disk, a hard disk, a solid state drive, a magnetic tape, or any other magnetic data storage medium, a CD-ROM, any other optical data storage medium, any physical medium with patterns of holes, a RAM, a PROM, and an EPROM, a FLASH-EPROM, an NVRAM, any other memory chip or cartridge.

Storage media is distinct from but may be used in conjunction with transmission media. Transmission media participates in transferring information between storage media. For example, transmission media includes coaxial cables, copper wire, and fiber optics. Transmission media can also take the form of acoustic or light waves, such as those generated during radio-wave and infra-red data communications.

Various forms of media may be involved in carrying one or more sequences of one or more instructions to a disclosed processor for execution. For example, the instructions may initially be carried on a magnetic disk or a solid-state drive of a remote computer. The remote computer can load the instructions into its dynamic memory and send the instructions over a telephone line using a modem. A local modem can receive the data on the telephone line and use an infra-red transmitter to convert the data to an infra-red signal. An infra-red detector can receive the data carried in the infra-red signal and appropriate circuitry can place the data on a data bus, for instance bus **214,** which carries the data to memory **212,** from which processor 202 retrieves and executes the instructions. The instructions may optionally be stored on a storage device either before or after execution by processor 202.

The exemplary embodiment of the present invention includes various processing steps described herein. The steps of the embodiment may be embodied in machine or computer executable instructions. The instructions can be used to cause a general purpose or special purpose system, which is programmed with the instructions, to perform the steps of the exemplary embodiment of the present invention. Alternatively, the steps of the exemplary embodiment of the present invention may be performed by specific hardware components that contain hard-wired logic for performing the steps, or by any combination of programmed computer components and custom hardware components.

## Claims

1. A method for transitioning between network conferences, the method comprising:
attending a first network conference (702) using a first conference state (226) and conferencing application (228) and storing by a processor (202) in a memory (210) at least one of video settings and audio settings (230, 232) as the first conference state (226);
displaying, on a display screen (118), Up-Next conference status (602) comprising a meeting time for a second network conference (704) and images (708) of attendees that have joined the second network conference (704); and
joining the second network conference (704) using the first conference state (226) and the conferencing application (228).

2. The method of claim 1, wherein the operation of joining comprises either
a) ending participation in the first network conference (702), and/or
b) wiping video streams of participants of the first network conference (702) from the display (702); and displaying video streams of participants of the second network conference (704).

3. The method of claim 1 or claim 2, wherein the operation of displaying further comprises:
obtaining a meeting identifier for the second network conference (704) from a calendar database;
requesting conference information for the second network conference (704) based on the meeting identifier;
receiving the conference information that includes the images (708) of the attendees that have joined the second network conference (704); and
determining the Up-Next conference status (602) from the conference information.

4. The method of any preceding claim, wherein the operation of joining comprises either
a) joining the second network conference (704) in response to received user input, and/or
b) muting a microphone used for the second network conference (704).

5. The method of any preceding claim, wherein the operation of displaying comprises displaying the Up-Next conference status (602) at a selected time interval before a start time of the second network conference (704).

6. The method of any preceding claim, wherein the operation of displaying comprises displaying the Up-Next conference status (602) on a first portion (124) of the display screen (118) and displaying the first network conference (702) on a second portion (126) of the display screen (118).

7. The method of any preceding claim, wherein the operation of displaying comprises displaying the Up-Next conference status (602) using at least one of a wiping, scrolling, and fading display effect.

8. The method of any preceding claim, further comprising requesting and receiving conference status information (114) for the second network conference (704) from a network server.

9. The method of any preceding claim, wherein the operation of displaying comprises displaying an identity of a meeting host of the second network conference (704) as part of the Up-Next conference status (602).

10. The method of claim 3, or any of claims 4 to 9 when dependent on claim 3, wherein the operation of obtaining comprises obtaining the meeting identifier and the meeting time from a calendar database.

11. The method of any preceding claim, wherein the operation of attending comprises attending the first network conference (702) using at least one of a wired network and a wireless network.

12. An apparatus (200) for transitioning between network conferences, according to the method of any preceding claim, the apparatus comprising:
a transceiver (212) configured to perform the attending;
a processor (202) configured to perform the obtaining and the storing;
a memory on which the first conference state (226) is stored; and
a display screen (118) configured to perform the displaying.

13. A non-transitory computer readable medium on which are stored program instructions that, when executed by one or more processors (202), cause the one or more processors (202) to perform the method of any of claims 1 to 11.

## Patentansprüche

1. Verfahren zum Wechseln zwischen Netzwerkkonferenzen, das Verfahren umfassend: Teilnehmen an einer ersten Netzwerkkonferenz (702) unter Verwendung eines ersten Konferenzzustands (226) und einer Konferenzanwendung (228) sowie Speichern mindestens einer der Videoeinstellungen und Audioeinstellungen (230, 232) als ersten Konferenzzustand (226) durch einen Prozessor (202) in einem Speicher (210);
Anzeigen des "Up-Next"-Konferenzstatus (602) auf einem Anzeigebildschirm (118), der eine Besprechungszeit für eine zweite Netzwerkkonferenz (704) sowie Bilder (708) von Teilnehmern umfasst, die der zweiten Netzwerkkonferenz (704) beigetreten sind; und
Beitreten der zweiten Netzwerkkonferenz (704) unter Verwendung des ersten Konferenzstatus (226) und der Konferenzanwendung (228).

2. Verfahren nach Anspruch 1, wobei der Verbindungsvorgang Folgendes umfasst:
a) Beenden der Teilnahme an der ersten Netzwerkkonferenz (702) und/oder
b) Ausblenden der Videostreams der Teilnehmer der ersten Netzwerkkonferenz (702) von der Anzeige (702) sowie Anzeigen der Videostreams der Teilnehmer der zweiten Netzwerkkonferenz (704).

3. Verfahren nach Anspruch 1 oder 2, wobei der Vorgang des Anzeigens ferner Folgendes umfasst:
Erhalten einer Besprechungskennung für die zweite Netzwerkkonferenz (704) aus einer Kalenderdatenbank;
Anfordern von Konferenzinformationen für die zweite Netzwerkkonferenz (704) auf der Grundlage der Besprechungskennung;
Empfangen der Konferenzinformationen, die die Bilder (708) der Teilnehmer einschließen, die der zweiten Netzwerkkonferenz (704) beigetreten sind; und
Bestimmen des Up-Next-Konferenzstatus (602) anhand der Konferenzinformationen.

4. Verfahren nach einem der vorstehenden Ansprüche, wobei der Verbindungsvorgang Folgendes umfasst:
a) Beitreten der zweiten Netzwerkkonferenz (704) als Reaktion auf eine empfangene Benutzereingabe und/oder
b) Stummschalten des für die zweite Netzwerkkonferenz verwendeten Mikrofons (704).

5. Verfahren nach einem der vorstehenden Ansprüche, wobei der Anzeigevorgang das Anzeigen des "Up-Next"-Konferenzstatus (602) in einem ausgewählten Zeitintervall vor einem Startzeitpunkt der zweiten Netzwerkkonferenz (704) umfasst.

6. Verfahren nach einem der vorstehenden Ansprüche, wobei der Anzeigevorgang das Anzeigen des Up-Next-Konferenzstatus (602) in einem ersten Abschnitt (124) des Anzeigebildschirms (118) und das Anzeigen der ersten Netzwerkkonferenz (702) in einem zweiten Abschnitt (126) des Anzeigebildschirms (118) umfasst.

7. Verfahren nach einem der vorstehenden Ansprüche, wobei der Anzeigevorgang das Anzeigen des "Up-Next"-Konferenzstatus (602) unter Verwendung mindestens eines von Wischen, Scrollen und Überblenden umfasst.

8. Verfahren nach einem der vorstehenden Ansprüche, wobei ferner Konferenzstatusinformationen (114) für die zweite Netzwerkkonferenz (704) von einem Netzwerkserver angefordert und empfangen werden.

9. Verfahren nach einem der vorstehenden Ansprüche, wobei der Anzeigevorgang das Anzeigen einer Identität eines Besprechungsleiters der zweiten Netzwerkkonferenz (704) als Teil des "Up-Next"-Konferenzstatus (602) umfasst.

10. Verfahren nach Anspruch 3 oder nach einem der Ansprüche 4 bis 9, sofern dieser von Anspruch 3 abhängt, wobei der Vorgang des Erhaltens das Erhalten der Besprechungskennung und der Besprechungszeit aus einer Kalenderdatenbank umfasst.

11. Verfahren nach einem der vorstehenden Ansprüche, wobei der Schritt der Teilnahme darin besteht, an der ersten Netzwerkkonferenz (702) unter Verwendung mindestens eines kabelgebundenen Netzwerks oder eines drahtlosen Netzwerks teilzunehmen.

12. Gerät (200) zum Wechseln zwischen Netzwerkkonferenzen nach dem Verfahren eines vorstehenden Anspruchs, das Gerät umfassend:
einen Transceiver (212), der zur Durchführung der Teilnahme konfiguriert ist;
einen Prozessor (202), der konfiguriert ist, um das Erhalten und das Speichern durchzuführen;
einen Speicher, in dem der erste Konferenzzustand (226) gespeichert ist; und
einen Anzeigebildschirm (118), der zur Anzeige konfiguriert ist.

13. Nichtflüchtiges, computerlesbares Medium, auf dem Programmanweisungen gespeichert sind, die, wenn sie von einem oder mehreren Prozessoren (202) ausgeführt werden, bewirken, dass der eine oder die mehreren Prozessoren (202) das Verfahren nach einem der Ansprüche 1 bis 11 ausführen.

## Revendications

1. Procédé permettant de passer d'une conférence réseau à une autre, le procédé comprenant : la participation à une première conférence réseau (702) à l'aide d'un premier état de conférence (226) et d'une application de conférence (228), et le stockage par un processeur (202) dans une mémoire (210) d'au moins l'un parmi les paramètres vidéo et les paramètres audio (230, 232) en tant que premier état de conférence (226) ;
l'affichage, sur un écran d'affichage (118), de l'état de la conférence suivante (602) comprenant une heure de réunion pour une seconde conférence réseau (704) et des images (708) des participants qui ont rejoint la seconde conférence réseau (704) ; et
la participation à la seconde conférence réseau (704) à l'aide du premier état de conférence (226) et de l'application de conférence (228).

2. Procédé selon la revendication 1, dans lequel l'opération de participation comprend
a) la fin de la participation à la première conférence réseau (702), et/ou
b) la suppression des flux vidéo des participants de la première conférence réseau (702) de l'écran (702) ; et l'affichage des flux vidéo des participants de la seconde conférence réseau (704).

3. Procédé selon la revendication 1 ou la revendication 2, dans lequel l'opération d'affichage comprend en outre :
l'obtention d'un identificateur de réunion pour la seconde conférence réseau (704) à partir d'une base de données de calendrier ;
la demande d'informations de conférence pour la seconde conférence réseau (704) sur la base de l'identificateur de réunion ;
la réception des informations de conférence qui comportent les images (708) des participants qui ont rejoint la seconde conférence réseau (704) ; et
la détermination de l'état de la conférence suivante (602) à partir des informations de conférence.

4. Procédé selon l'une quelconque revendication précédente, dans lequel l'opération de participation comprend
a) la participation à la seconde conférence réseau (704) en réponse à une entrée utilisateur reçue, et/ou
b) la désactivation du son d'un microphone utilisé pour la seconde conférence réseau (704).

5. Procédé selon l'une quelconque revendication précédente, dans lequel l'opération d'affichage comprend l'affichage de l'état de la conférence suivante (602) à un intervalle de temps sélectionné avant une heure de début de la seconde conférence réseau (704).

6. Procédé selon l'une quelconque revendication précédente, dans lequel l'opération d'affichage comprend l'affichage de l'état de la conférence suivante (602) sur une première partie (124) de l'écran d'affichage (118) et l'affichage de la première conférence réseau (702) sur une seconde partie (126) de l'écran d'affichage (118).

7. Procédé selon l'une quelconque revendication précédente, dans lequel l'opération d'affichage comprend l'affichage de l'état de la conférence suivante (602) à l'aide d'au moins l'un parmi un effet d'affichage par suppression, par défilement et par fondu.

8. Procédé selon l'une quelconque revendication précédente, comprenant en outre la demande et la réception d'informations sur l'état de la conférence (114) pour la seconde conférence réseau (704) à partir d'un serveur réseau.

9. Procédé selon l'une quelconque revendication précédente, dans lequel l'opération d'affichage comprend l'affichage d'une identité d'un hôte de réunion de la seconde conférence réseau (704) dans le cadre de l'état de la conférence suivante (602).

10. Procédé selon la revendication 3, ou selon l'une quelconque des revendications 4 à 9 lorsqu'elle dépend de la revendication 3, dans lequel l'opération d'obtention comprend l'obtention de l'identificateur de réunion et de l'heure de réunion à partir d'une base de données de calendrier.

11. Procédé selon l'une quelconque revendication précédente, dans lequel l'opération de participation comprend la participation à la première conférence réseau (702) à l'aide d'au moins l'un parmi un réseau filaire et un réseau sans fil.

12. Appareil (200) permettant de passer d'une conférence réseau à une autre, selon le procédé selon l'une quelconque revendication précédente, l'appareil comprenant :
un émetteur-récepteur (212) configuré pour effectuer la participation ;
un processeur (202) configuré pour effectuer l'obtention et le stockage ;
une mémoire sur laquelle le premier état de conférence (226) est stocké ; et
un écran d'affichage (118) configuré pour effectuer l'affichage.

13. Support lisible par ordinateur non transitoire sur lequel sont stockées des instructions de programme qui, lorsqu'elles sont exécutées par un ou plusieurs processeurs (202), amènent le ou les processeurs (202) à mettre en œuvre le procédé selon l'une quelconque des revendications 1 à 11.
